# DEMANDE DE BREVET EUROPEEN

(11) **EP 1 209 943 A1**
(43) Date de publication de la demande: **29.05.2002**
(21) Numéro de dépôt: 01402625.6
(22) Date de dépôt: 11.10.2001
(51) Int. Cl.: H04Q 7/38

(54) **Procédé de repartition des ressources dans un reseau de télécommunication et application de ce procédé à l'admission d'appels**

(30) Priorité: 24.11.2000 FR 0015218
(71) Demandeur: ALCATEL, 75008 Paris (FR)
(72) Inventeur: Boudjema, Eric, 92100 Boulogne (FR); Magnier, Anne, 75011 Paris (FR); Sehedic, Yann, 92170 Vanves (FR)
(74) Mandataire: Smith, Bradford Lee

(57) **Abrégé**

La présente invention concerne un procédé de répartition des ressources (16) de transmission dans un système de télécommunication dans lequel les appels provenant des, ou destinés à des, terminaux (10ᵢ) transitent par une station (12) de connexion.

Selon l'invention, les ressources (16) de la station sont réparties en ressources (Rᵢ) spécifiquement attribuées aux terminaux connectés à la station et en ressources (22) communes pouvant être utilisées par tout terminal connecté à la station lorsque ses ressources spécifiques ne sont pas suffisantes.

L'invention facilite l'admission des appels dans le réseau.

## Description

L'invention concerne un procédé pour répartir des ressources dans un réseau de télécommunication. Elle concerne aussi l'application d'un tel procédé à l'admission d'un appel dans un réseau.

Pour optimiser l'utilisation des réseaux de télécommunication, il est préférable que ces derniers transmettent un nombre maximal de communications.

Toutefois, l'ensemble des communications admises dans un réseau ne doit pas utiliser une quantité de ressources de transmission supérieure à celle disponible dans le réseau.

Autrement, si cette situation se produit, le réseau sature et ne transmet pas convenablement des communications déjà admises, la saturation provoquant des retards ou des interruptions des communications établies.

La fréquence et/ou le risque d'une telle saturation est déterminé par l'opérateur qui définit ainsi une qualité de transmission du réseau.

Actuellement, pour définir cette qualité, les opérateurs utilisent généralement un des deux modes de fonctionnement suivants :

Dans un premier mode de fonctionnement, les ressources nécessaires à la transmission des communications provenant d'un terminal sont constamment et spécifiquement réservées à ce terminal.

Ainsi, une partie déterminée des ressources du réseau n'est utilisable que par un seul terminal auquel ces ressources sont attribuées, quel que soit l'état d'activation de ce terminal - état de transmission ou état de veille.

Une qualité de transmission maximale est ainsi assurée de façon permanente puisque les ressources de transmission nécessaires aux terminaux sont constamment disponibles dans le réseau. Ces ressources sont, par exemple, une fréquence ou un code.

Toutefois, ce premier mode de fonctionnement optimise très faiblement l'exploitation du réseau, des ressources de transmission étant réservées pour un terminal alors même que ce dernier peut ne pas transmettre de communications.

C'est pourquoi, dans un second mode de fonctionnement, les ressources de transmission nécessaires à une communication sont attribuées lors de l'admission de cette communication dans le réseau, et ce pour la durée de cette communication. Dans ce cas, avant d'admettre la communication dans le réseau, l'acceptation ou le rejet de cette communication est déterminé lors de l'appel (c'est-à-dire lors de la demande de communication) en fonction des ressources de transmission nécessaires à cette communication et de la disponibilité des ressources dans le réseau.

Ainsi, lorsqu'une communication nécessite une quantité de ressources supérieure à celle disponible dans le réseau, l'appel est refusé.

Pour cela, le réseau comprend des organes d'admission d'appel dont le rôle est de déterminer l'admission ou le refus d'un nouvel appel sur le réseau de telle façon que la qualité de l'appel entrant soit assurée pendant toute la durée de sa transmission, et que la qualité des communications en cours de transmission soit maintenue.

C'est pourquoi, ces organes d'admission d'appel analysent les paramètres du réseau (débit actuel, ressources de transmission disponibles, ...) et les para-mètres de la communication demandant à être transmise (débit, destinataire, ressources de transmission nécessaires...) pour décider de l'acceptation ou du rejet de cette communication dans le réseau.

L'invention part de la constatation que ces deux procédés connus sont inadaptés pour certains réseaux de télécommunications où les caractéristiques des communications transmises par chaque terminal peuvent varier dans une grande mesure. Il en est ainsi, par exemple, lorsque des appels sont émis par des termi-naux reliés à des stations multimédias pouvant transmettre des communications diverses (voix, images, programmes, etc.).

Dans ce cas, lorsque les communications émises par des terminaux sont acceptées, la quantité d'informations transmises postérieurement par ces terminaux est inconnue et variable.

Dès lors, pour assurer une qualité suffisante de transmission, l'utilisation d'un organe d'admission d'appel fonctionnant comme décrit précédemment, c'est-à-dire en fonction des caractéristiques de l'appel entrant, n'est plus possible puisqu'on ne connaît pas les caractéristiques des communications transmises après l'admis-sion d'un terminal dans le réseau,

Pour résoudre ce problème, on pourrait faire appel au premier mode de fonctionnement mentionné ci-dessus, mais en général les ressources du réseau sont trop limitées et trop coûteuses pour réserver, en permanence, des ressources à chaque terminal. A titre d'exemple, on citera ici un réseau de télécommunication par satellite(s).

C'est pourquoi, la présente invention fournit un procédé d'admission d'appel permettant, dans un réseau de télécommunication, de décider de l'admission ou du rejet d'un appel tout en ignorant quelles ressources de transmission nécessite la communication à établir.

Le procédé conforme à l'invention est caractérisé en ce que les ressources de transmission du réseau sont divisées en deux types de ressources : des ressources spécifiques, attribuées exclusivement à chaque terminal connecté, et des ressources communes, partagées entre tous les terminaux connectés.

Dans une réalisation, les ressources de transmission consistent en au moins l'une des ressources suivantes : des fréquences, des puissances, des périodes de temps, des codes.

Par ailleurs, dans une réalisation, on utilise un modèle statistique de communication pour chaque terminal sur une période de temps donnée pour déterminer les ressources spécifiques.

Ainsi, en utilisant le procédé conforme à l'invention, on peut déterminer avec une probabilité élevée la possibilité d'accepter un appel sans saturer le réseau tout en ignorant la quantité de ressources dont nécessite cet appel. En effet, même si les ressources spécifiques sont insuffisantes, on pourra puiser dans les ressources communes.

Dans une réalisation, on peut utiliser une période de temps du modèle de chaque terminal est de 24 heures.

Selon une réalisation, on prévoit pour chaque terminal, à un instant donné, une quantité de communication égale à son maximum de communication possible pondéré par son taux d'utilisation habituelle, ou Erlang, à cet instant.

Dans une réalisation, un appel est admis si la probabilité de saturation du réseau par ce nouvel appel est inférieure à un seuil prédéterminé et cette probabilité est fonction d'au moins un des paramètres suivants : la proportion de ressources spécifiques par rapport aux ressources d'ensemble (ou la proportion de ressources communes par rapport aux ressources d'ensemble), le nombre de terminaux qui communiquent alors qu'une nouvelle communication est demandée, les modèles statistiques de communication des terminaux actifs et les modèles statistiques de communication des terminaux demandant à communiquer et la marge d'erreur pour chaque modèle.

L'invention concerne aussi une station de connexion pour un système de télécommunication dans lequel les appels provenant, ou destinés à, des terminaux transitent par cette station de connexion qui comporte des moyens pour répartir les ressources de transmission de la station vers les terminaux ou des terminaux vers la station, en des ressources spécifiquement attribuées aux terminaux connectés à la station et en des ressources communes pouvant être utilisées par tout terminal connecté à la station lorsque ces ressources spécifiques ne sont pas suffisantes.

Selon une réalisation, cette station comprend des moyens pour répartir au moins l'une des ressources suivantes : des fréquences, des puissances, des périodes de temps, des codes.

La station, selon une autre réalisation, comporte aussi des moyens pour déterminer les ressources spécifiques faisant appel à un modèle statistique de communication pour chaque terminal sur une période de temps donnée.

Ce modèle statistique permet alors de prévoir une quantité de communication théorique provenant de chaque terminal à un instant donné de cette période.

Dans ces cas, la station peut comporter des moyens pour attribuer à chaque terminal une quantité de communication égale à son maximum de communication possible pondéré par son taux d'utilisation habituelle, ou Erlang, à cet instant.

Dans une réalisation, la station comporte aussi des moyens d'admission des appels dans le système de télécommunication qui permet d'admettre des appels si la probabilité de saturation du réseau par ce nouvel appel est inférieure à un seuil prédéterminé et cette probabilité est fonction d'au moins un des paramètres suivants : la proportion de ressources spécifiques par rapport aux ressources d'ensemble (ou la proportion de ressources communes par rapport aux ressources d'ensemble), le nombre de terminaux qui communiquent alors qu'une nouvelle communication est demandée, les modèles statistiques de communication des terminaux actifs et les modèles statistiques de communication des terminaux demandant à communiquer et la marge d'erreur pour chaque modèle.

L'invention concerne aussi un système de télécommunication comprenant des moyens de répartition des ressources de transmission. Ce système de télécommunication est tel que des appels provenant, ou destinés à, des terminaux transitent par une station de connexion et il est caractérisé en ce qu'il comporte des moyens pour que les ressources de transmission entre la station et les terminaux soient réparties en des ressources spécifiquement attribuées aux terminaux connectés à la station et en des ressources communes pouvant être utilisées par tout terminal connecté à la station lorsque ses ressources spécifiques ne sont pas suffisantes.

Dans une réalisation, ces moyens de répartition des ressources sont tels qu'ils répartissent au moins l'une des ressources suivantes : des fréquences, des puissances, des périodes de temps, des codes.

Selon une réalisation, le système de répartition des ressources comporte un moyen pour déterminer les ressources spécifiques à l'aide d'un modèle statistique de communication pour chaque terminal sur une période de temps donnée, ce modèle statistique permettant de prévoir une quantité de communication théorique provenant de chaque terminal à un instant donné de cette période.

Par ailleurs, le système peut comporter des moyens pour attribuer à chaque terminal à un instant donné, une quantité de communication égale à son maximum de communication possible pondéré par son taux d'utilisation habituelle, ou Erlang, à cet instant.

Ce système peut aussi comporter un moyen d'admission des appels tel qu'un appel est admis si la probabilité de saturation du réseau par ce nouvel appel est inférieure à un seuil prédéterminé et cette probabilité est fonction d'au moins un des paramètres suivants : la proportion de ressources spécifiques par rapport aux ressources d'ensemble (ou la proportion de ressources communes par rapport aux ressources d'ensemble), le nombre de terminaux qui communiquent alors qu'une nouvelle communication est demandée, les modèles statistiques de communication des terminaux actifs et les modèles statistiques de communication des terminaux demandant à communiquer et la marge d'erreur pour chaque modèle.

D'autres caractéristiques et avantages de l'invention apparaîtront avec la description de certains de ses modes de réalisation, celle-ci étant effectuée, à titre non limitatif, en se référant aux dessins ci-annexés sur lesquels :
la figure 1 est une vue d'ensemble d'un réseau de télécommunication,
la figure 2 est une représentation graphique d'une modélisation des communications d'un terminal, et
la figure 3 est une représentation schématique d'une l'utilisation conforme à l'invention des ressources de transmission d'une station de connexion.

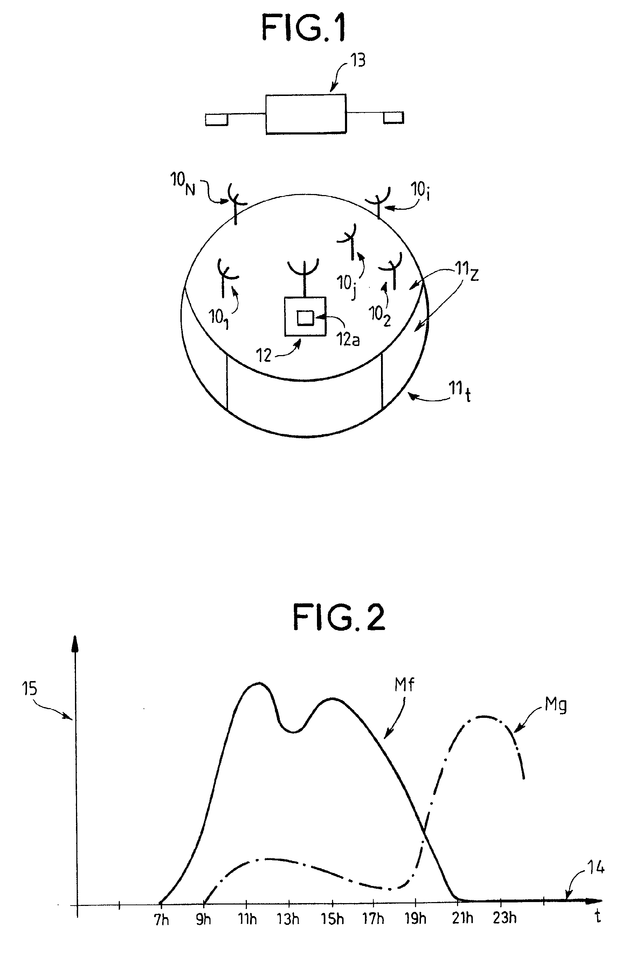

Dans le réseau de télécommunication représenté sur la figure 1, on fait appel à une constellation de satellites, par exemple à orbites basses ou moyennes, et la terre 11ₜ est divisée en zones 11_{z} à l'intérieur de chacune desquelles se trouve une station 12 de connexion.

Les communications entre terminaux 10₁, 10₂, ... 10_{N} d'une même zone s'effectuent de la façon suivante : un terminal 10ᵢ transmet sa communication, tout d'abord, à la station 12 par l'intermédiaire des équipements à bord d'un satellite 13 et, ensuite, la station 12 transmet la communication au terminal destinataire 10ⱼ également par l'intermédiaire du satellite 13.

Une communication entre un terminal 10ᵢ d'une zone et un terminal d'une autre zone terrestre s'effectue en établissant une liaison (terrestre ou par satellite) entre des stations de connexion des deux zones concernées.

Il est également possible d'établir une communication entre un terminal d'une zone et un terminal d'un autre réseau grâce à une connexion établie entre la station 12 et cet autre réseau.

Dans un tel système de télécommunication, les ressources de transmission sont limitées et sont gérées par un organe 12ₐ d'admission d'appel. L'exemple de l'invention qui va être décrit concerne un tel organe 12ₐ.

Lorsqu'un terminal 10ᵢ doit transmettre une ou plusieurs communications via la station 12 et que ce terminal 10ᵢ n'est pas connecté à cette station 12, le ter-minal 10ᵢ appelle la station 12 pour établir une connexion. L'organe 12ₐ d'admission d'appel de la station décide alors, en fonction de la situation des ressources de transmission de la station 12 et de la qualité de transmission exigée par l'opérateur du réseau, d'admettre ou de rejeter l'appel provenant du terminal.

Conformément à l'invention, cette décision est prise sans connaître la nature exacte des communications que le terminal 10ᵢ veut transmettre.

Pour cela, dans un premier temps, l'organe 12ₐ d'admission d'appel utilise une modélisation des communications transmises par chaque terminal 10₁, 10₂, ... 10_{N} telle que représentée dans la figure 2.

La figure 2 est un diagramme sur lequel le temps, en heures, est porté sur l'axe des abscisses 14, et une intensité de communication, par exemple un débit en kbit/s, est portée sur l'axe 15 des ordonnées.

Le modèle de communication M^{f} d'un terminal 10_{f} peut être obtenu en déterminant, pour chaque heure d'une journée, la valeur la plus probable d'intensité de communication transmise par le terminal 10_{f}.

Cette valeur est obtenue de préférence en calculant la moyenne des valeurs d'intensité de communication précédemment mesurées à cet instant de la journée pour ce terminal.

Dans l'exemple de la figure 2, le modèle M^{f} de communication de la station 10_{f} correspond à un modèle de type « bureau » avec une pointe d'intensité de communication vers 11 heures du matin.

Un deuxième modèle M^{g} de communication, de type « résidentiel », transmis par un terminal 10_{g} est aussi représenté. Ce deuxième modèle présente des pointes de consommation différentes du modèle précédent : le maximum des communications intervient dans la soirée entre 19h30 et 23h.

De façon générale, tout modèle Mⁱ de communication d'un terminal 10ᵢ est statistique. Autrement dit, la prévision d'intensité de communication qui peut être faite pour chaque terminal 10ᵢ, à partir de chaque modèle M^{g}, se fait avec une certaine marge d'erreur.

En tenant compte de cette marge d'erreur, l'opérateur du réseau peut considérer que le modèle M^{f} de communication de chaque terminal 10ᵢ permet de prévoir la quantité de communication qui est transmise après acceptation de l'appel de ce terminal.

Connaissant la prévision de communication d'un terminal appelant le réseau, l'organe de contrôle d'appel peut, à partir du seuil de qualité exigé par l'opérateur, refuser ou admettre un appel.

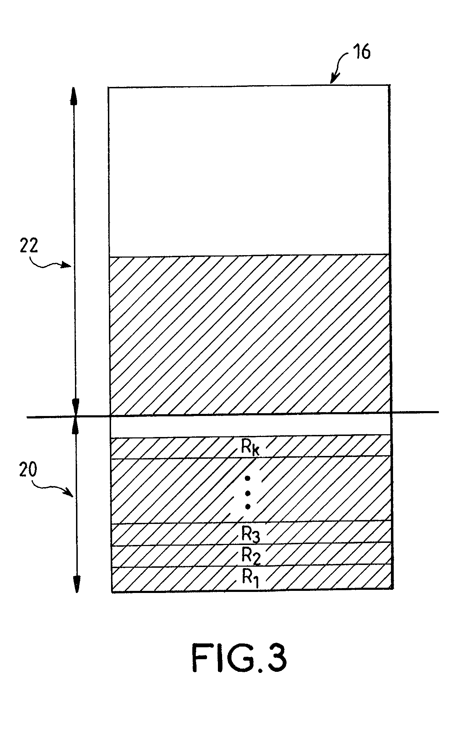

Dans la figure 3, une utilisation, conforme à l'invention, des ressources 16 de transmission de la station 12 pour refuser ou admettre un appel est représentée schématiquement.

Cette utilisation correspond à une application de l'invention pour des transmissions dites montantes, c'est-à-dire allant d'un terminal 10ᵢ vers la station 12.

Conformément à l'invention, ces ressources 16 de transmission de la station 12 sont séparées en deux catégories :

Les ressources Rᵢ de première catégorie, dites ressources spécifiques, sont attribuées spécifiquement à un terminal lorsque l'appel de ce terminal est admis dans le réseau. Lorsque ces ressources spécifiques sont ainsi attribuées à un terminal, elles sont exclusivement réservées à ce terminal, quel que soit son débit de communication.

Les ressources 22 de deuxième catégorie, dites ressources communes, qui n'ont pas été attribuées spécifiquement à un terminal, sont mises en commun et utilisées par tout terminal nécessitant des ressources supplémentaires aux ressources qui lui ont été spécifiquement attribuées.

Sur la figure 3, les ressources Rᵢ spécifiques à chaque terminal 10ᵢ ont été représentées dans une partie 20.

Dans cet exemple simplifié, une même quantité de ressources spécifiques R₁, R₂, ... Rₖ est attribuée à chacun des terminaux, respectivement 10₁, 10₂, ...10ₖ connecté à la station 12. En d'autres termes, R₁ = R₂ = R₃ = ... Rₖ.

De fait, pour des raisons de clarté d'explication, on suppose que les terminaux 10₁, 10₂, ..., 10ₖ nécessitent tous la même quantité de ressources en leur attribuant un même modèle de communication, par exemple du type M^{f}.

Par ailleurs, l'utilisation d'une partie 22 de ressources communes permet à l'opérateur d'augmenter la qualité du réseau, c'est-à-dire de réduire le risque de saturation, pour un nombre donné de connexions.

En effet, dans cette partie 22, les ressources sont communes, c'est-à-dire utilisables par tous les terminaux 10₁ , 10₂, ...10ₖ.

Ainsi, lorsque les ressources de transmission Rᵢ spécifiquement attribuées à un terminal 10ᵢ ne suffisent pas à acheminer les communications de ce terminal 10ᵢ, les ressources communes de la partie 22 sont utilisées en complément des ressources Rᵢ spécifiquement attribuées au terminal 10ᵢ.

Cette utilisation d'une partie 22 de ressources communes permet d'augmenter le nombre de terminaux connectés sans diminuer la qualité du réseau puisque, statistiquement, il est peu probable que tous les terminaux connectés à la station 12 nécessitent en même temps une quantité supérieure de ressources à leur ressources spécifiques.

Par exemple, dans le cas simple de deux terminaux 10_{f} et 10_{g}, lorsque le terminal 10_{f} transmet une quantité de communication telle qu'il nécessite plus de ressources que les ressources spécifiques (R_{f}) de transmission qui lui sont attribuées, il est probable que le terminal 10_{g} transmette, à cet instant, une quantité de communication telle que les ressources (R_{g}) de transmission qui lui ont été spécifiquement attribuées soient suffisantes.

Dans ce cas, le terminal 10_{f} transmet ses communications à l'aide de ses ressources spécifiques, R_{f}, et des ressources 22 communes aux deux terminaux, ces dernières étant utilisées uniquement par le terminal 10_{f}.

L'avantage d'utiliser des ressources communes apparaît alors clairement puisqu'il permet d'attribuer à chaque terminal des ressources spécifiques inférieures aux ressources de transmission qui lui sont nécessaires lorsqu'il transmet son maximum possible de communications.

Ainsi, les ressources communes ont un rôle de tampon qui est utilisé par chaque terminal lorsque ses ressources spécifiques lui sont insuffisantes.

Toutefois, il peut se produire que les ressources de transmission com-munes ne soient pas suffisantes pour pallier le déficit en ressources spécifiques d'au moins un des terminaux 10_{f} et/ou 10_{g}. Dans ce cas, le réseau est saturé.

L'opérateur peut déterminer la probabilité de voir cette situation se produire. Selon un aspect important du mode de réalisation de l'invention, cette probabilité dépend de l'un au moins des paramètres suivants : la proportion de ressources spécifiques par rapport aux ressources d'ensemble (ou la proportion de ressources communes par rapport aux ressources d'ensemble), le nombre de terminaux qui communiquent alors qu'une nouvelle communication est demandée, les modèles statistiques de communication des terminaux actifs et les modèles statistiques de communication des terminaux demandant à communiquer et la marge d'erreur pour chaque modèle.

En conséquence, connaissant la répartition des ressources de transmission de la station 12 en une partie 22 des ressources communes et en une partie 20 des ressources spécifiques, connaissant les ressources R₁ , R₂, ... Rₖ attribuées à chaque terminal lors de sa connexion et connaissant les modèles de communication de chaque terminal 10₁, 10₂, ...10ₖ, il est possible de déterminer la probabilité de saturation du réseau à tout instant.

De ce fait, connaissant les paramètres précédemment décrits et la qualité de transmission fixée par un opérateur, un organe d'admission d'appels peut déterminer si un appel est accepté dans le réseau sans risque de saturation de ce réseau supérieur au risque accepté par l'opérateur.

Ainsi, conformément à l'invention, l'opérateur de la station 12 accepte ou refuse un appel sans connaître ses caractéristiques réelles pour assurer la qualité requise des transmissions.

Il convient de noter ici que, par ressources de communication, on entend la fréquence porteuse et/ou un code et/ou un intervalle de temps et/ou une puissance attribuée à une communication.

Un exemple concret de décision prise par un organe d'admission d'appel, conforme à l'invention, est donné ci-dessous, en utilisant la figure 3.

Dans l'exemple, montré par l'indicateur 16, le pourcentage minimal fixé de la partie 22 commune des ressources est, approximativement, des deux tiers des ressources totales de la station 12. En d'autres termes, au maximum un tiers des ressources 16 de la station 12 du réseau est attribué spécifiquement à un ou plusieurs terminaux.

Dans l'exemple de la figure 3, l'indicateur 16 signale que les ressources de transmission de la partie 20 des ressources spécifiques sont amplement utilisées (approximativement à 87,5 %) tandis que l'utilisation de la partie 22 commune des ressources est moyenne (de l'ordre de 50 %).

Lorsque des terminaux désirent se connecter à la station 12, l'organe 12ₐ d'admission d'appel de la station 12 décide de l'admission ou du rejet de ces appels en fonction de la qualité exigée par l'opérateur, c'est-à-dire du risque de saturer le réseau.

Pour cela, dans un premier temps, l'organe 12ₐ d'admission d'appel considère s'il est possible d'attribuer les ressources spécifiques prédéterminées à chaque terminal appelant le réseau.

Pour simplifier l'explication, on suppose comme précédemment que tous les terminaux actifs sont identiques et ont le même modèle de communication. Autrement dit, la même quantité de ressources spécifiques est attribuée à chaque terminal : R₁ = R₂ = ...= Rₖ.

De même, on considère qu'un terminal 10ₖ₊₁, appelant la station pour lui transmettre des communications, a le même modèle de communication que les terminaux 10₁, 10₂, ..., 10ₖ à partir de l'instant de son appel.

Puisque k terminaux sont actifs et occupent approximativement 87,5% des ressources spécifiques, on en déduit que chaque terminal utilise 87,5/k% des ressources de la partie 20 des ressources spécifiques.

Dès lors, si k est inférieur ou égal à 6, un nouveau terminal 10ₖ₊₁ ne peut recevoir des ressources spécifiques Rₖ₊₁ identiques à celles attribuées aux autres terminaux 10₁, 10₂, ...10ₖ.

Par exemple, pour k=6, chaque terminal utilise environ 14,6 % des ressources spécifiques et, 87,5 % des ressources étant déjà utilisées, un nouveau terminal ne peut être accepté sans dépasser le pourcentage des ressources spécifiques attribuées, faisant courir au réseau un risque de saturation supérieur à celui fixé par l'opérateur de la station 12.

Par contre, si k est supérieur ou égal à 7, un nouveau terminal peut se voir attribuer des ressources spécifiques identiques aux autres terminaux.

Si k=7, chacun d'eux utilise 12,5 % des ressources de la partie 20 de ressources spécifiques. Dès lors, un nouveau terminal 10ₖ₊₁ peut se voir attribuer des ressources spécifiques Rₖ₊₁ sans que la partie 20 des ressources spécifiques ne dépasse le seuil fixé. La partie 20 des ressources spécifiques est alors utilisée à 100%.

De fait, l'organe d'admission d'appel connaît la valeur de k et peut déterminer s'il est possible d'attribuer au terminal 10ₖ₊₁ les ressources de transmission spécifiques qui lui sont attribuées de façon prédéterminée.

Si le terminal 10ₖ₊₁ ne peut pas utiliser les ressources de transmission spécifiques qui lui correspondent de façon prédéterminée, l'organe d'admission d'appel refuse la connexion du terminal 10ₖ₊₁.

Dans le cas contraire, l'organe d'admission d'appel doit considérer si les ressources communes sont suffisantes pour transmettre les communications déjà en cours et la communication cherchant à se connecter tout en respectant la proba-bilité de saturation fixée par l'opérateur du réseau.

Cette considération est faite au moyen des modèles statistiques de chaque terminal réalisés à partir des communications précédentes.

En effet, l'opérateur de la station 12 peut déterminer les modèles de communication de chaque terminal 10ᵢ - par exemple le débit utilisé, en moyenne, par chaque terminal à chaque instant de la journée - avec une précision donnée, fonction, entre autres paramètres, du nombre de communications prises en compte pour cette modélisation.

A partir de cette modélisation, l'opérateur peut prédéterminer, avec une probabilité déterminée liée à l'utilisation d'un modèle statistique, quelles sont les ressources nécessaires à un terminal à un instant donné de la journée.

Connaissant les ressources nécessaires aux terminaux connectés, avec une certaine probabilité, les ressources spécifiques attribuées au terminal appelant, les ressources de transmission mises en commun, et la qualité de transmission exigée par l'opérateur de la station 12, l'organe de contrôle d'appel peut déterminer, avec une probabilité donnée, si l'admission d'un nouvel appel permet de respecter la qualité exigée par l'opérateur vis-à-vis de l'éventuelle future connexion et des connexions déjà en cours.

Si tel est le cas, l'appel est alors admis et la connexion est établie.

Par ailleurs, alors que la réalisation décrite ci-dessus correspond à une utilisation dans le sens dit montant, c'est-à-dire une communication allant d'un terminal 10ᵢ vers la station 12, une variante de l'invention peut être utilisée pour les communications dites descendantes, c'est à dire allant de la station 12 vers un terminal 10i.

En effet, les communications descendantes se distinguent des communications montantes en ce qu'elles sont déjà admises dans le réseau - elles proviennent du satellite 13.

Dès lors, l'utilisation de ressources spécifiquement attribuées à un terminal - qui permettent d'assurer à ce terminal une communication minimale avec le réseau - n'est pas nécessaire et l'ensemble des ressources de la station 12 est utilisée de façon commune.

Cependant, l'organe 12ₐ caractérise chaque terminal 10_{f} par une provision P_{f} de ressources représentative, à un instant donné, des ressources nécessaires au terminal 10_{f} lors de communications descendantes.

Dans la réalisation préférée, cette provision P_{f} est obtenue à partir de modèles de communication comme par exemple les modèles de la figure 2.

Ainsi, lors d'une communication descendante, l'organe 12ₐ d'admission d'appel utilise les provisions caractéristiques de chaque terminal pour évaluer le risque de saturation du réseau par l'admission d'un appel.

En d'autres termes, une communication descendante est admise si la probabilité de saturation du réseau par ce nouvel appel est inférieure à un seuil prédéterminé alors que cette probabilité est fonction des paramètres suivants : la proportion de ressources provisionnées par rapport aux ressources d'ensemble (ou la proportion de ressources communes par rapport aux ressources d'ensemble), le nombre de terminaux qui communiquent alors qu'une nouvelle communication est demandée, les modèles statistiques de communication des terminaux actifs et les modèles statistiques de communication des terminaux demandant à communiquer et la marge d'erreur pour chaque modèle.

Enfin, il convient de noter que la présente invention peut être appliquée dans de nombreux types de réseaux de télécommunications. En particulier, elle s'applique non seulement aux réseaux de télécommunication par satellites dans lesquels les zones sont de grande étendue, mais aussi aux réseaux dans lesquels les zones ou cellules sont de plus faible étendue tels que les réseaux de téléphones portables. Dans ce cas, l'admission des appels ne se fait pas obligatoirement au niveau de chaque cellule ; elle peut être commandée à un niveau supérieur, pour un ensemble de cellules.

## Revendications

1. Procédé de répartition des ressources (16) de transmission dans un système de télécommunication dans lequel des appels provenant, ou destinés à, des terminaux (10ᵢ) transitent par une station (12) de connexion de ces communications, **caractérisé en ce que** les ressources (16) de transmission contrôlées par la station sont réparties en des ressources (20) spécifiquement attribuées aux terminaux connectés à la station et en des ressources (22) communes pouvant être utilisées par tout terminal connecté à la station lorsque ses ressources spécifiques ne sont pas suffisantes.

2. Procédé selon la revendication 1, **caractérisé en ce que** les ressources (16) de transmission consistent en au moins l'une des ressources suivantes : des fréquences, des puissances, des périodes de temps, des codes.

3. Procédé selon la revendication 1 ou 2, **caractérisé en ce que** pour déterminer les ressources (Rᵢ) spécifiques, on utilise un modèle (Mᵢ) statistique de communication pour chaque terminal sur une période de temps donnée, ce modèle (Mᵢ) statistique permettant de prévoir une quantité de communication théorique provenant de chaque terminal (10ᵢ) à un instant donné de cette période.

4. Procédé selon la revendication 3, **caractérisé en ce que** la période de temps du modèle de chaque terminal est de 24 heures.

5. Procédé selon la revendication 3 ou 4, **caractérisé en ce qu'**on prévoit pour chaque terminal (10ᵢ), à un instant donné, une quantité de communication égale à son maximum de communication possible pondéré par son taux d'utilisation habituelle, ou Erlang, à cet instant.

6. Application du procédé selon l'une quelconque des revendications précédentes à un procédé d'admission des appels dans le système de télécommunication, dans lequel un appel est admis si la probabilité de saturation du réseau par ce nouvel appel est inférieure à un seuil prédéterminé et cette probabilité est fonction d'au moins un des paramètres suivants : la proportion de ressources (Rᵢ) spécifiques par rapport aux ressources (16) d'ensemble, ou la proportion de ressources (22) communes par rapport aux ressources (16) d'ensemble, le nombre de terminaux (10ᵢ) qui communiquent alors qu'une nouvelle communication est demandée, les modèles statistiques de communication des terminaux actifs et les modèles statistiques de communication des terminaux demandant à communiquer et la marge d'erreur pour chaque modèle.

7. Station (12) de connexion pour un système de télécommunication dans lequel les appels provenant de, ou destinés à des, terminaux (10ᵢ) transitent par cette station (12) de connexion, **caractérisée en ce qu'**elle comporte des moyens (12a) pour répartir les ressources (16) de transmission de la station (12) vers les terminaux (10ᵢ) ou des terminaux (10ᵢ) vers la station (12), en des ressources (10ᵢ) spécifiquement attribuées aux terminaux (10ᵢ) connectés à la station et en des ressources (22) communes pouvant être utilisées par tout terminal (10ᵢ) connecté à la station (12) lorsque ces ressources (Rᵢ) spécifiques ne sont pas suffisantes.

8. Station (12) selon la revendication 7, **caractérisée en ce que** les moyens (12a) de répartition des ressources (16) comportent des moyens pour répartir au moins l'une des ressources suivantes : des fréquences, des puissances, des périodes de temps, des codes.

9. Station (12) selon la revendication 7 ou 8, **caractérisée en ce qu'**elle comporte des moyens (12a) pour déterminer les ressources (Rᵢ) spécifiques faisant appel à un modèle (Mᵢ) statistique de communication pour chaque terminal sur une période de temps donnée, ce modèle statistique permettant de prévoir une quantité de communication théorique provenant de chaque terminal (10ᵢ) à un instant donné de cette période.

10. Station (12) selon l'une quelconque des revendications 7 à 9, **caractérisée en qu'**elle comporte des moyens (12a) pour attribuer à chaque terminal à un instant donné une quantité de communication égale à son maximum de communication possible pondéré par son taux d'utilisation habituelle, ou Erlang, à cet instant.

11. Station (12) selon l'une quelconque des revendications 7 à 10, **caractérisée en qu'**elle comporte des moyens (12a) d'admission des appels dans le système de télécommunication, ces moyens permettant d'admettre des appels si la probabilité de saturation du réseau par ce nouvel appel est inférieure à un seuil prédéterminé et cette probabilité est fonction d'au moins un des paramètres suivants : la proportion de ressources (Rᵢ) spécifiques par rapport aux ressources (16) d'ensemble, ou la proportion de ressources (22) communes par rapport aux ressources (16) d'ensemble, le nombre de terminaux qui communiquent alors qu'une nouvelle communication est demandée, les modèles statistiques de communication des terminaux actifs et les modèles statistiques de communication des terminaux demandant à communiquer et la marge d'erreur pour chaque modèle.
